# EUROPEAN PATENT SPECIFICATION

(11) **EP 0 631 536 B1**
(45) Date of publication and mention of the grant of the patent: **11.12.1996**
(21) Application number: 93908148.5
(22) Date of filing: 12.03.1993
(51) Int. Cl.: B29B 17/00, B29C 67/20, B29C 70/00

(54) **USE OF POWDER COATING MATERIAL**
VERWENDUNG VON PULVERLACK
UTILISATION D'UNE MATIERE PULVERULENTE D'ENROBAGE

(30) Priority: 13.03.1992 NL 9200479
(43) Date of publication of application: 04.01.1995
(73) Proprietor: TEN BERGE, Wilhelmus Eduard Anthonius, NL-2421 XX Nieuwkoop (NL)
(72) Inventor: TEN BERGE, Wilhelmus Eduard Anthonius, NL-2421 XX Nieuwkoop (NL)
(74) Representative: de Bruijn, Leendert C.
(86) International application number: NL9300060
(87) International publication number: WO9317851

(56) References cited:
- DE-C- 3 936 974
- NL-A- 7 105 940
- DATABASE WPIL Section Ch, Week 8723, 30 April 1987 Derwent Publications Ltd., London, GB; Class A, AN 87-160116 & JP,A,62 094 335 (NISSAN MOTOR K.K.) see abstract
- JOURNAL OF CELLULAR PLASTICS vol. 18, no. 4, July 1982, WESTPORT CONN US pages 230 - 232 NARKIS ET AL 'Syntactic Foams III. Three-Phase Materials Produced from Resin Coated Microballoons'

## Description

The invention relates to a process for producing a composite material and a novel use of powder coating material, such as waste powder coatings.

A general description of "powder coating", which may also be identified as "coating powder", is found in Kirk-Othmer, Encyclopedia of Chemical Technology, 3rd Edition, Vol. 19, pp. 1-27.

The present invention in particular relates to the use of thermosetting powder coatings which melt, for example, between 100 and 150°C and set, for example, between 150 and 200°C. During the application, said powders are charged electrostatically and are sprayed onto the object to be coated. The powder which does not land on the object is recovered with the aid of a recovery device, for example a cyclone. Sometimes this powder cannot be reused, for example towards the end of the treatment of a batch of objects. Waste powder is also produced when the colour is changed, because powder is formed with a contaminated colour, which is no longer usable as a coating. Furthermore, the manufacturer of powder coatings also has to face the powder coating waste problem because certain batches can no longer or must no longer be distributed commercially.

Hitherto, waste powder from the powder coating industry has been destroyed in special combustion plants, causing considerable environmental problems.

The invention is designed to overcome this problem, and it makes efficient use of the waste powder from the powder-coating production and processing industry. Attempts to find a solution for a useful application of this waste powder by mixing this powder with other (plastic) materials and melting it failed as it appeared that a uniform, homogeneous melt could not be obtained.

The present invention is based on the surprising finding that a particulate carrier material may be coated first with a thermosetting powder coating and, subsequently, the individual particles are fused together. Although one would expect that such a technique would be suitable for thermoplastic powders, it is surprising that thermosetting powder coatings may find a useful application by such a technique.

Accordingly, it was surprisingly found that coating powder can be used for producing composite material.

The invention therefore relates to a process for producing a composite material, in which a particulare carrier material is coated with uncured, possibly molten, thermosetting powder coatings, such as waste powder coatings, and the coated particles of the carrier material are heated in a mould to a temperature at which the powder coating coats of the individual particles melt and fuse together, forming a plastic matrix with the particulate carrier material distributed therein, whereupon thermal curing takes place with the formation of the composite material.

The coating powder, for example, is a thermosetting waste powder coating as described above.

It should be noted that DE-C-3 936 974 also relates to the re-use of a coating material. According to this reference a paint coagulate, which is obtained as a wet waste material in industrial large scale paint installations, is processed to moulded products. The coagulate is dried, mixed with a filler such as fibres and pressed to moulded articles at a temperature of at least 130°C and by using pressure.

In Journal of Cellular Plastics, July-August 1992, pages 230-232 a process for the coating of microballons is disclosed. This process involves blending resin and microspheres resulting in a microsphere surface with finely divided powdery resin. The dry coated spheres can be shaped and moulded like conventional moulding components.

In the process according to the invention, the particulate carrier material is preferably a material in the form of grains, beads or fibres. In general, a carrier material will be used which will not melt at the temperatures used for melting the powder coating or for subsequent hardening thereof.

In the process according to the invention, the carrier material is preferably chosen from ceramic materials such as baked clay, (blast furnace) slags, lava (pumice), glass, naturally occurring materials such as gravel, sand and wood or other products such as paper, plastics, (sintered) fly ash or metal.

It is found that, for example, baked clay grains used for hydrocultures or glass beads are particularly satisfactory.

The dimensions of the carrier material particles may vary within wide ranges and, for example, be in the range of 0.01 mm - 10 cm, preferably 0.1 mm - 5 cm, particularly preferably 1 mm - 2 cm.

The process according to the invention is suitable for processing various types of powder coatings which may be applied by melting around the particulate carrier material and which can be thermally cured subsequently. There is, however, a particularly wide range of powder coatings on a polyester basis, for example triglycidyl isocyanurate (TGIC), so that there is a preference for using products of this type.

As the abovementioned article in Kirk-Othmer describes, the melting point and the curing temperature of powder coatings can vary over relatively wide ranges. In the process according to the invention, it is preferred that the melting point range and the curing temperature range partially overlap each other, but in such a way that the centre of the melting range is below that of the curing range, the melting point of the powder coating in particular being between 130 and 150°C, for example around 140°C, and the curing temperature between 170 and 190°C, for example around 180°C.

The application of the powder coating on the carrier material is carried out by heating the particles of the carrier material to a temperature above the melting point of the powder coating and dipping the heated carrier material particles into the powder coating.

This "dipping" also comprises a method in which the coating of the carrier material is carried out by passing the carrier material, which has been heated to above the melting point of the powder coating, through a fluidised bed of the powder coating.

Powder can also be applied by coating support material with an adhesive such as a fatty or waxy material which has a boiling point in the curing range of the powder coating. The carrier material is then dipped into the powder, as a result of which a powder layer adheres to the surface, the material being coated in such a way that the outermost layer comprises loose powder, as a result of which the grains do not adhere to each other and a bulk-pourable (free-flowing) material is produced. During curing, the binder will boil, as a result of which the coating will foam. This produces a composite of the carrier material with a foam-like or porous structure.

According to a preferred embodiment of the process of the invention the porosity of the composite material is controlled by adjusting the starting temperature or the particulate carrier material. For instance, it is possible to adjust the porosity from 0 % up to e.g. 40 % by adjusting the temperature of the used particulate carrier material to a value of e.g. 300°C (porosity 0 %) to a value of the temperature in a melting range of the powder coating (porosity e.g. 40 %). If a particulate carrier material such as fly ash having a particle size in the range of 4-8 mm and a powder coating having a melting range between 130-150°C (e.g. TGIC) are used, a porosity of 33 % results if the starting temperature or the particulate carrier material is about 200°C. Temperatures of 230°C, 250°C, and 270°C yield a porosity of 22 %, 10 %, and 0 % respectively. For carrier materials or another type, which have other specific heat properties, other temperatures are required for obtaining corresponding porosity values. E.g. carrier material comprising gravel or pebbles require temperatures which may be about 50-70°C lower for obtaining similar porosity results.

In the process of the invention the particles or the carrier material will generally be heated to a temperature above the melting point as well as above the curing point of the powder coating before the carrier material particles are coated with the powder coating. Consequently, the temperature on which the carrier particles are heated will generally be above 170 or 190°C. Although the curing temperature is exceeded, the individual coated particles fuse together, which seem to be contradictory to the thermosetting property. As noted in the above, the heating temperature of the (uncoated) particles may be in the range of 170-400°C, preferably 190-350°C, in particular 200-300°C.

The application of the powder coating coat on the carrier material must take place in such a way that the thickness of the uncured powder coat is sufficient to ensure that, after mutual fusing of the separate coats of the coated particles and the curing step, a coherent composite material is produced. It was found that according to the invention the thickness of the uncured powder coating coat of the carrier material is expediently 0.1-5 mm, preferably 1-3 mm.

For the purpose of producing a foamed composite material, the powder coating material used as the coat can be admixed with a blowing agent which boils or is decomposed at a temperature above the melting point of the powder coating. In this way it is possible to obtain very light yet strong composite materials.

It is also possible to incorporate, in the composite material according to the invention, reinforcing means such as glass fibres, carbon fibres and/or aramid fibres.

It will be evident that the density of the composite material produced according to the invention will depend strongly on the type of the carrier materials used. Beads composed entirely of glass will produce a heavier material than hydroculture grains which can be used as a carrier material.

There are innumerable application possibilities for the composite material produced according to the invention, for example separating walls for use indoors and outdoors, floors, sound panels, flower pots, fishponds, swimming pools, ceilings and other construction and decorative materials in the construction industry, shipping, masts, pillars and furniture.

The present invention also relates to composite material obtainable according to the process described in the above. Also shaped articles form part of the invention. The porous composite material according to the invention has many interesting applications in view of the permeable structure. It is e.g. possible to produce a composite material having a predetermined water permeability. This property is useful in applications such as sheet pilings or covering materials for dykes but also as drain pipes or drain sheets. A further possibility is the use as acoustic sound absorbing material.

To produce, for example, plates, pillars or sections, a continuous process can be used.

The invention is explained in more detail in the following examples.

### Example I

Sintered ceramic grains having an average size of 2-40 mm are heated to a temperature of 180°C.

The heated grains are dipped into the powder coating. The powder melts on the grain surface, but then resolidifies owing to the falling temperature of the grain. The grains thus coated form the new base material, which can be used to make products.

Said grains are poured into a mould having the negative form of the desired product. The mould is heated up to the curing temperature. During heating, the coating will flow again, as a result of which the grains fuse together. Thereafter, the coating will cure, to form a connecting element between the grains, thus producing a firm structure.

### Example II

Grains having a particle size between 4 and 20 mm (ARGEX or LYTAG) are dipped into a liquid, so that the surface is wetted. These grains are dipped or rolled in the powder, so that a crust of moist powder is formed. The subsequent process is the same as in Example I, except that the liquid contains a foaming agent.

## Claims

1. Process for producing a composite material, in which a particulate carrier material is coated with uncured, possibly molten, thermosetting powder coatings, such as waste powder coatings,in which the carrier material is coated by heating the particles of the carrier material to a temperature above the melting point of the powder coating and dipping the heated carrier material particles into the powder coating, and the coated particles of the carrier material are heated in a mould to a temperature at which the powder coating coats of the individual particles melt and fuse together, forming a plastic matrix with the particulate carrier material distributed therein, whereupon thermal curing takes place with the formation of the composite material.

2. Process according to Claim 1, in which the carrier material is used in the form of grains, beads or fibres.

3. Process according to one or more of the preceding claims, in which the carrier material is chosen from ceramic materials such as baked clay, (blast furnace) slags, lava (pumice), glass, naturally occurring materials such as gravel, sand and wood or other products such as paper, plastics, (sintered) fly ash or metal.

4. Process according to one or more of the preceding claims, in which the particles of the carrier material have dimensions of 0.1 mm - 5 cm, preferably 1 mm - 2 cm.

5. Process according to one or more of the preceding claims, in which the powder coating is a polyester, for example triglycidyl isocyanurate (TGIC).

6. Process according to one or more of the preceding claims, in which the melting point range and the curing temperature range partially overlap each other, but in such a way that the centre of the melting range is below that of the curing range, and in particular the melting point of the powder coating is between 130 and 150°C, and the curing temperature between 170 and 190°C.

7. Process according to one or more of the preceding claims, in which the coating of the carrier material is carried out by passing the carrier material, which has been heated to above the melting point of the powder coating, through a fluidised bed of the powder coating.

8. Process according to one or more of the preceding claims, in which the thickness of the uncured powder coating coat of the carrier material is 0.1-5 mm, preferably 1-3 mm.

9. Process according to one or more of the preceding claims, in which the powder coating material used as the coat is admixed with a blowing agent which boils or is decomposed at a temperature above the melting point of the powder coating.

10. Process according to one or more of the preceding claims, in which, in addition, reinforcing means such as glass fibres, carbon fibres or aramid fibres are used.

11. Process according to one or more of the preceding claims, in which the porosity of the composite material is controlled by adjusting the starting temperature of the particulate carrier material.

12. Use of powder coatings, such as waste powder coatings, for producing composite material comprising a plastic matrix of cured powder coating material with particulate carrier material distributed therein.

## Patentansprüche

1. Verfahren zur Herstellung eines Verbundstoffs, bei dem ein aus einzelnen Teilchen bestehendes Trägermaterial mit ungehärteten, möglicherweise geschmolzenen hitzehärtbaren Pulverlacken, beispielsweise Pulverlackabfall, überzogen wird, wobei das Trägermaterial überzogen wird, indem die Teilchen des Trägermaterials auf eine Temperatur über dem Schmelzpunkt des Pulverlacks erhitzt, die erhitzten Trägermaterialteilchen in den Pulverlack getaucht und die überzogenen Teilchen des Trägermaterials in einer Form auf eine Temperatur erhitzt werden, bei der die Pulverlacküberzüge der einzelnen Teilchen schmelzen und miteinander verschmelzen, wodurch eine plastische Grundmasse mit dem darin verteilten, aus einzelnen Teilchen bestehenden Trägermaterial entsteht, und anschließend eine thermische Härtung mit Bildung des Verbundstoffs stattfindet.

2. Verfahren nach Anspruch 1, dadurch gekennzeichnet, daß Trägermaterial im Form von Granulat, Perlen oder Fasern verwendet wird.

3. Verfahren nach einem oder mehreren der vorstehenden Ansprüche, dadurch gekennzeichnet, daß das Trägermaterial unter Keramikmaterial, beispielsweise gebranntem Ton, (Hochofen-)Schlacke, Lavagestein (Bimsstein), Glas, in der Natur vorkommenden Stoffen, beispielsweise Kieselsteinen, Sand und Holz, oder anderen Erzeugnissen, beispielsweise Papier, Kunststoffen, (gesinterter) Flugasche oder Metall, ausgewählt wird.

4. Verfahren nach einem oder mehreren der vorstehenden Ansprüche, dadurch gekennzeichnet, daß die Teilchen des Trägermaterials eine Größe von 0,1 mm bis 5 cm, vorzugsweise 1 mm bis 2 cm, besitzen.

5. Verfahren nach einem oder mehreren der vorstehenden Ansprüche, dadurch gekennzeichnet, daß als Pulverlack ein Polyester, beispielsweise Triglycidylisocyanurat (TGIC), verwendet wird.

6. Verfahren nach einem oder mehreren der vorstehenden Ansprüche, dadurch gekennzeichnet, daß sich der Schmelzpunkt- und Härtetemperaturbereich teilweise so überdecken, daß die Mitte des Schmelzpunktbereichs unter der Mitte des Härtetemperaturbereichs liegt und sich im besonderen der Schmelzpunkt des Pulverlacks zwischen 130 °C und 150 °C und die Härtetemperatur zwischen 170 °C und 190 °C befindet.

7. Verfahren nach einem oder mehreren der vorstehenden Ansprüche, dadurch gekennzeichnet, daß das Überziehen des Trägermaterials dadurch erfolgt, daß das Trägermaterial, das über den Schmelzpunkt des Pulverlacks erhitzt worden ist, durch ein Pulverlackwirbelbett geführt wird.

8. Verfahren nach einem oder mehreren der vorstehenden Ansprüche, dadurch gekennzeichnet, daß die Dicke des ungehärteten Pulverlacküberzugs des Trägermaterials 0,1 bis 5 mm, vorzugsweise 1 bis 3 mm, beträgt.

9. Verfahren nach einem oder mehreren der vorstehenden Ansprüche, dadurch gekennzeichnet, daß dem als Überzug verwendeten Pulverlackmaterial ein Treibmittel zugesetzt wird, das bei einer Temperatur über dem Schmelzpunkt des Pulverlacks siedet oder sich zersetzt.

10. Verfahren nach einem oder mehreren der vorstehenden Ansprüche, weiterhin dadurch gekennzeichnet, daß Verstärkungsmaterial wie beispielsweise Glasfasern, Kohelnstoffasern oder Aramidfasern, verwendet wird.

11. Verfahren nach einem oder mehreren der vorstehenden Ansprüche, dadurch gekennzeichnet, daß die Porosität des Verbundstoffs durch die Wahl der Ausgangstemperatur des aus einzelnen Teilchen bestehenden Trägermaterials bestimmt wird.

12. Verwendung von Pulverlack, beispielsweise Pulverlackabfall, zur Herstellung eines Verbundstoffs, der eine plastische Grundmasse aus gehärtetem Pulvermaterial und darin verteiltem, aus einzelnen Teilchen bestehendem Trägermaterial umfaßt.

## Revendications

1. Procédé de production d'une matière composite, dans lequel on enrobe un support particulaire avec des enrobages pulvérulents non durcis qu'on peut faire fondre et thermodurcissables, tels que des enrobages pulvérulents perdus, dans lequel on enrobe le support par chauffage des particules du support à une température au dessus du point de fusion de l'enrobage pulvérulent et trempage des particules de support chauffées dans l'enrobage pulvérulent, les particules enrobées du support étant chauffées dans un moule à une température à laquelle les couches d'enrobage pulvérulent des particules individuelles fondent et s'unissent par fusion, formant une matrice plastique avec distribution dedans du support particulaire, le durcissement thermique prenant place avec la formation de la matière composite.

2. Procédé selon la revendication 1, dans lequel le support est utilisé sous forme de grains, perles ou fibres.

3. Procédé selon l'une quelconque des revendications précédentes, dans lequel le support est choisi parmi les matériaux céramiques tels que l'argile cuite, le laitier (de haut-fourneau), la lave (pierre ponce), le verre, les matières d'origine naturelle telles que le gravier, le sable et le bois ou d'autres produits tels que le papier, les plastiques, les cendres volantes (frittées) ou le métal.

4. Procédé selon une ou plusieurs des revendications précédentes, dans lequel les particules du support ont des dimensions de 0,1 mm à 5 cm, de préférence de 1 mm à 2 cm.

5. Procédé selon une ou plusieurs des revendications précédentes, dans lequel l'enrobage pulvérulent est un polyester par exemple l'isocyanurate de triglycidyle (TGIC).

6. Procédé selon une ou plusieurs des revendications précédentes, dans lequel les gammes de point de fusion et de température se recoupent partiellement, mais de telle façon que le centre de la gamme de point de fusion soit en dessous de celle de la gamme de durcissement et en particulier, le point de fusion de l'enrobage pulvérulent est entre 130 et 150°C et la température de durcissement est entre 170 et 190°C.

7. Procédé selon une ou plusieurs des revendications précédentes, dans lequel l'enrobage du support est effectué en faisant passer le support qu'on a traité au dessus du point de fusion de l'enrobage pulvérulent, à travers un lit fluidisé d'enrobage pulvérulent.

8. Procédé selon une ou plusieurs des revendications précédentes, dans lequel l'épaisseur de la couche d'enrobage pulvérulent non durcie du support est de 0,1 à 5 mm, de préférence 1 à 3 mm.

9. Procédé selon une ou plusieurs des revendications précédentes, dans lequel la matière d'enrobage pulvérulent utilisé comme couche est mélangée avec un agent de soufflage qui bout ou se décompose à une température au dessus du point de fusion de l'enrobage pulvérulent.

10. Procédé selon une ou plusieurs des revendications précédentes, dans lequel, on utilise, en outre, des moyens de renforcement tels que des fibres de verre, des fibres de carbone ou des fibres d'aramide.

11. Procédé selon une ou plusieurs des revendications précédentes, dans lequel la porosité de la matière composite est réglée par réglage de la température de départ du support particulaire.

12. Utilisation des enrobages pulvérulents tels que les enrobages pulvérulents perdus, pour produire une matière composite comprenant une matrice plastique de matière d'enrobage pulvérulent durcie avec un support particulaire distribué dedans.
